# EUROPÄISCHE PATENTANMELDUNG

(11) **EP 2 375 102 A1**
(43) Veröffentlichungstag der Anmeldung: **12.10.2011**
(21) Anmeldenummer: 10003804.1
(22) Anmeldetag: 09.04.2010
(51) Int. Cl.: F16H 3/64, B30B 1/26

(54) **Getriebeeinheit und Anordnung für eine Stanzpresse**

(71) Anmelder: BRUDERER AG, CH-9320 Frasnacht (CH)
(72) Erfinder: Hafner, Josef Thomas, 9404 Rorschacherberg (CH)
(74) Vertreter: Münch, Martin Walter

(57) **Zusammenfassung**

Die Erfindung betrifft eine Getriebeeinheit mit einem Planetengetriebe zum Verbinden eines Antriebsmotors mit einer Stanzpresse. Die Getriebeeinheit umfasst ein Antriebselement (2) zur Ankopplung an den Antriebsmotor und ein Abtriebselement (17) zur Ankopplung an die Stanzpresse und ist derartig schaltbar, dass wahlweise ein erstes oder ein zweites Übersetzungsverhältnis einstellbar ist. Das Abtriebselement der Getriebeeinheit wird von deren Gehäuse (17) gebildet.

## Beschreibung

Die vorliegende Erfindung betrifft eine Getriebeeinheit zum Verbinden eines Antriebsmotors mit einer Arbeitsmaschine sowie eine Anordnung umfassend eine Stanzpresse, einen Antriebsmotor und eine solche Getriebeeinheit gemäss den Oberbegriffen der unabhängigen Patentansprüche.

Einige Arbeitsmaschinen, wie z.B. Stanzautomaten, benötigen die eigentliche Prozesskraft nur über einen sehr kleinen Teil ihres Arbeitszyklusses, weshalb sie typischerweise einen Kurbeltrieb mit einem Schwungrad aufweisen, welches die nur sehr kurzzeitig benötigte, dafür jedoch sehr hohe Prozesskraft verfügbar macht. Dabei wird das Schwungrad üblicherweise über einen Riementrieb von einem vergleichsweise kleinen Elektromotor angetrieben, welcher nach der Bereitstellung der Prozesskraft für den Stanzvorgang viel Zeit hat, die verbrauchte Energie wieder in das Schwungrad einzuspeisen, bevor der nächste Stanzvorgang beginnt. Derartige Stanzautomaten weisen den Vorteil auf, dass sie eine hohe Stanzfrequenz von typischerweise zwischen 100 und 2000, oder in Einzelfällen sogar mehr, Stanzvorgängen pro Minute ermöglichen. Nachteilig ist jedoch, dass ein langsamer Betrieb, wie er wünschenswert wäre zum Einrichten und Austesten von Stanzwerkzeugen, nicht möglich ist.

Seit einiger Zeit gibt es auch servomotorisch angetriebene Stanzautomaten in verschiedenen Bauweisen, z.B. mit Spindelantrieb oder mit Linearmotoren, mit denen der Stanzprozess beliebig langsam durchgeführt werden kann. Diese Stanzautomaten weisen jedoch den Nachteil auf, dass sie teuer sind und nur verhältnismässig niedrige Stanzfrequenzen ermöglichen.

Es stellt sich deshalb die Aufgabe, technische Mittel zur Verfügung zu stellen, mit denen es möglich wird, die zuvor genannten Nachteile des Standes der Technik auf kostengünstige Weise zu überwinden und auch bestehende Anlagen ohne grössere bauliche Veränderungen umzurüsten.

Diese Aufgabe wird durch die Getriebeeinheit und die Anordnung gemäss den unabhängigen Patentansprüchen gelöst.

Demgemäss betrifft ein erster Aspekt der Erfindung eine Getriebeeinheit zum Verbinden eines Antriebsmotors, wie z.B. ein Elektromotor oder ein Hydraulikmotor, mit einer Arbeitsmaschine, und zwar bevorzugterweise mit einem Stanzautomaten bzw. mit einer Stanzpresse. Die Getriebeeinheit umfasst ein Antriebselement zur Ankopplung an den Antriebsmotor und ein Abtriebselement zur Ankopplung an die Arbeitsmaschine. Dabei ist die Getriebeeinheit schaltbar, derart, dass sie wahlweise ein erstes oder ein zweites Übersetzungsverhältnis aufweist. Unter einer "schaltbaren" Getriebeeinheit wird hier eine Getriebeeinheit verstanden, deren Übersetzungsverhältnis ohne bauliche Veränderungen bzw. Eingriffe verändert werden kann, bevorzugterweise durch Betätigung von Umschaltmitteln wie z.B. eines Umschalthebels oder eines Betätigungsknopfes. Die Getriebeeinheit ist in ein Gehäuse integriert ist, welches gleichzeitig das Abtriebselement bildet. D.h. das Gehäuse, welches die Getriebeeinheit weitestgehend oder vollständig umgibt, rotiert im Betrieb um die übrigen Getriebekomponenten herum und ist derartig ausgestaltet, dass seine Rotationsbewegung mittels geeigneter Übertragungsmittel wie z.B. Flach-, Keil- oder Zahnriemen, Ketten oder Zahnrädern auf eine Antriebwelle einer Arbeitsmaschine übertragen werden kann.

Mit derartigen Getriebeeinheiten wird es möglich, Arbeitsmaschinen, welche nur kurzzeitig aber dafür eine sehr grosse Prozesskraft benötigen und diese aus einem Schwungrad beziehen, auf kostengünstige Weise mit einem für den Normalbetrieb mit Schwungrad dimensionierten Motor derartig anzutreiben, dass diese wahlweise im Normalbetrieb oder in einem langsamen Betriebsmodus zum Einrichten und Austesten des Arbeitsprozesses betrieben werden können, wobei für den langsamen Betriebsmodus, in welchem das Schwungrad nicht wirksam oder nur geringfügig wirksam ist, vergleichbare Prozesskräfte zur Verfügung gestellt werden können wie im Normalbetrieb, in welchem das Schwungrad wirksam ist.

Entsprechend wird es mit der erfindungsgemässen Getriebeeinheit erstmals möglich, auf kostengünstige Weise Stanzpressen bzw. Stanzautomaten mit Kurbeltrieb und Schwungrad derartig anzutreiben, dass diese bei voller Stanzkraft sowohl im Normalbetrieb mit hohen Stanzfrequenzen betrieben werden können als auch in einem Langsambetrieb zum Einrichten und Austesten von Stanzwerkzeugen. Auch wird es mit der erfindungsgemässen Getriebeeinheit möglich, bestehende Anlagen ohne grössere Modifikationen entsprechend umzurüsten.

In einer bevorzugten Ausführungsform der Getriebeeinheit ist das anspruchsgemässe erste Übersetzungsverhältnis 1:1, d.h. das Abtriebselement dreht im Betrieb mit der gleichen Drehzahl wie das Antriebselement.

Ist dabei die Getriebeeinheit derartig ausgebildet, dass bei gewähltem ersten Übersetzungsverhältnis die Getriebeeinheit gesperrt ist, was bevorzugt ist, so ergibt sich der Vorteil, dass beim Betrieb im ersten Übersetzungsverhältnis keine Reibungsverluste im Getriebe entstehen, es also praktisch zu keinen Leistungsverlusten zwischen Antriebs- und Abtriebselement kommt.

In einer weiteren bevorzugten Ausführungsform der Getriebeeinheit ist das anspruchsgemässe zweite Übersetzungsverhältnis eine Untersetzung grösser 1:15, d.h. das Antriebselement dreht im Betrieb mehr als fünfzehn mal schneller als das Abtriebselement. Etwa ab diesem Untersetzungsverhältnis ergeben sich beim Antrieb von typischen Stanzpressen mit Kurbeltrieb und Schwungrad über die Getriebeeinheit sowohl im Normalbetrieb als auch im Langsambetrieb etwa vergleichbare Stanzkräfte.

In noch einer weiteren bevorzugten Ausführungsform der Getriebeeinheit weist die Getriebeeinheit ein Planetengetriebe auf, welches ein Hohlrad, ein Sonnenrad und mehrere an einem Planetenträger gelagerte Planetenräder umfasst.

Dabei ist es bevorzugt, dass das Planetengetriebe mehrstufig ausgebildet ist, wobei jede Getriebestufe ein Hohlrad, ein Sonnenrad und mehrere an einem Planetenträger gelagerte Planetenräder aufweist.

Mit derartigen Planetengetrieben lassen sich grosse Untersetzungsverhältnisse bei moderaten Bauteilbelastungen erzielen.

Weiter ist es bei Ausführungsformen mit Planetengetrieben bevorzugt, dass die Getriebestufen eine unterschiedliche Anzahl Planetenräder aufweisen, derart, dass die Getriebestufen je mehr Planetenräder aufweisen, je weiter sie in Kraftflussrichtung stromabwärts vom Antriebselement angeordnet sind. Es sind also mit zunehmendem Drehmoment bzw. mit abnehmender Drehzahl mehr Planetenräder vorhanden. Hierdurch kann die Belastung der einzelnen Planetenräder verhältnismässig gering gehalten werden.

Weisen bei Ausführungsformen der Getriebeeinheit mit mehrstufigen Planetengetrieben die Planetenräder sämtlicher Getriebestufen einen identischen Durchmesser auf, was bevorzugt ist, so können sie identisch ausgebildet werden. Dies ergibt den Vorteil, dass nur ein Planetenradtyp verwendet werden muss, wodurch sich Kosten bei der Herstellung und der Lagerhaltung senken lassen.

Aus den gleichen Gründen wie zuvor erwähnt ist es weiter bevorzugt, dass bei Ausführungsformen der Getriebeeinheit mit mehrstufigen Planetengetrieben die Hohlräder sämtlicher Getriebestufen einen identischen Durchmesser aufweisen und bevorzugterweise identisch bezüglich ihres Verzahnungsmoduls sind.

Auch ist es bei Ausführungsformen der Getriebeeinheit mit mehrstufigen Planetengetrieben bevorzugt, dass jeweils das Sonnenrad der in Kraftflussrichtung stromabwärts vom Antriebselement angeordneten Getriebestufe vom Planetenträger der in Kraftflussrichtung stromaufwärts von dieser Getriebestufe angeordneten Getriebestufe gebildet wird. Auf diese Weise lässt sich eine kompakte Bauweise realisieren.

Ebenso ist es bevorzugt, dass bei Ausführungsformen der Getriebeeinheit mit mehrstufigen Planetengetrieben die Hohlräder sämtlicher Getriebestufen von einem gemeinsamen, insbesondere aus mehreren Teilen gebauten Bauteil gebildet sind, wodurch sich die Fertigung vereinfachen lässt und bei Verschleiss die Hohlräder einzeln ausgetauscht werden können.

In einer weiteren bevorzugten Ausführungsform der Getriebeeinheit mit einem einstufigen oder mehrstufigen Planetengetriebe ist die Schaltbarkeit der Getriebeeinheit dadurch gegeben, dass das oder die Hohlräder des Planetengetriebes wahlweise mit einer im Betrieb stillstehenden Körperlichkeit oder dem Antriebselement koppelbar sind. Auf diese Weise kann zwischen der zweiten Übersetzung und dem Sperren des Getriebes (erste Übersetzung ist 1:1) hin und her geschaltet werden.

Hierzu ist die Getriebeeinheit mit Vorteil derartig ausgebildet, dass das oder die Hohlräder des Planetengetriebes zum wahlweisen Koppeln mit der im Betrieb stillstehenden Körperlichkeit und dem Antriebselement axial zwischen einer ersten und einer zweiten Position verschiebbar sind, jeweils unter Erzeugung eines Kraft- und/oder Formschlusses in Rotationsrichtung mit der im Betrieb stillstehenden Körperlichkeit bzw. mit dem Antriebselement. Eine solche Konstruktionsweise ermöglicht mechanisch robuste und gleichzeitig kompakte Lösungen.

Dabei ist die Getriebeeinheit bevorzugterweise zudem derartig ausgebildet ist, dass das Verschieben des Hohlrads oder der Hohlräder des Planetengetriebes zumindest in eine der beiden Verschieberichtungen mittels eines pneumatischen oder hydraulischen Antriebs bewirkbar ist, bevorzugterweise mittels einer oder mehrerer pneumatischer Kolben-Zylinder-Einheiten. Hierdurch kann das Umschalten der Getriebeeinheit auf einfache Weise automatisiert werden bzw. mittels einer zentralen Maschinensteuerung erfolgen.

Auch ist es dabei bevorzugt, dass die Getriebeeinheit derartig ausgebildet ist, dass das Verschieben des Hohlrads oder der Hohlräder des Planetengetriebes in einer ersten der beiden Verschieberichtungen mittels des pneumatischen Antriebs entgegen einer von einem oder mehreren elastischen Federelementen erzeugten federnden Rückstellkraft bewirkbar ist und bei Drucklosschaltung des pneumatischen oder hydraulischen Antriebs eine Rückstellung durch Verschiebung des Hohlrads oder der Hohlräder des Planetengetriebes in der zweiten, der ersten Verschieberichtung entgegen gesetzten Verschieberichtung erfolgt. Auf diese Weise weist die Getriebeeinheit bei drucklosem pneumatischen oder hydraulischen Antrieb eine definierte Schaltstellung auf, wobei es bevorzugt ist, wenn dies die Schaltstellung ist, in welcher die Getriebeeinheit das anspruchsgemässe erste Übersetzungsverhältnis aufweist, da dies für den Normalbetrieb vorgesehen ist und es so bei einem Systemausfall im Normalbetrieb nicht zu einem Umschalten der Getriebeeinheit kommen kann.

In noch einer weiteren bevorzugten Ausführungsform der Getriebeeinheit mit einem einstufigen oder mehrstufigen Planetengetriebe ist der Planetenträger oder, bei einer Getriebeeinheit mit einem mehrstufigen Planetengetriebe, der Planetenträger der letzten Getriebestufe, drehfest und bevorzugterweise starr mit dem Gehäuse der Getriebeeinheit verbunden. Diese Konstruktionsweise begünstig eine kompakte und mechanisch robuste Getriebeeinheit.

In noch einer weiteren bevorzugten Ausführungsform der Getriebeeinheit weist das Gehäuse der Getriebeeinheit an seinem Aussenumfang eine Lauffläche für einen Keilriemen oder für einen Flachriemen auf, oder eine Verzahnung für einen Zahnriemen, eine Kette oder ein Zahnrad, zum Ankoppeln an ein Antriebselement einer Arbeitsmaschine. Hierdurch lässt sich die Ankopplung an eine mit dem Getriebe anzutreibende Arbeitsmaschine auf einfache und zuverlässige Weise realisieren.

Ein zweiter Aspekt der Erfindung betrifft eine Anordnung umfassend
a) eine Stanzpresse bzw. einen Stanzautomaten mit einem Kurbel- oder Exzentertrieb zur Umwandlung der rotatorischen Bewegung einer Antriebswelle der Stanzpresse in die Stanzbewegung des Werkzeugs und mit einem mit der Antriebswelle koppelbaren oder gekoppelten Schwungrad;
b) einen Antriebsmotor zum Antreiben der Antriebswelle der Stanzpresse; und
c) eine Getriebeeinheit nach einem der vorangehenden Ansprüche.

Dabei ist das Antriebselement der Getriebeeinheit mit dem Antriebsmotor gekoppelt oder über eine schaltbare Kupplung koppelbar und das Abtriebselement der Getriebeeinheit ist mit der Antriebswelle der Stanzpresse bzw. des Stanzautomaten oder mit dem Schwungrad gekoppelt oder über eine schaltbare Kupplung koppelbar.

Die Bildung derartiger Anordnungen stellt eine bevorzugte Verwendung der erfindungsgemässen Getriebeeinheit dar und lässt die Vorteile der Erfindung deutlich zu Tage treten, da es Dank der Getriebeeinheit bei solchen Anordnungen möglich wird, die Stanzpresse bzw. den Stanzautomaten mit einem für den Normalbetrieb mit Schwungrad dimensionierten Motor wahlweise im Normalbetrieb mit hohen Stanzfrequenzen oder in einem Langsambetrieb zum Einrichten und Austesten von Stanzwerkzeugen zu betreiben.

In einer bevorzugten Ausführungsform der Anordnung sind der Antriebsmotor und die Übersetzungsverhältnisse der Getriebeeinheit derartig dimensioniert, dass die maximale Stanzkraft, die im Betrieb mit demjenigen Übersetzungsverhältnis der Getriebeeinheit, bei welchem die langsamere Drehung der Antriebswelle resultiert (Langsambetrieb), am Stössel der Stanzpresse erzeugbar ist, gleich gross oder grösser ist als die maximale Stanzkraft, die im Betrieb mit dem Übersetzungsverhältnis der Getriebeeinheit, bei welchem die schnellere Drehung der Antriebswelle resultiert (Normalbetrieb), am Stössel der Stanzpresse erzeugbar ist. Der Antriebsmotor und die Übersetzungsverhältnisse sind also derartig gewählt, dass im Langsambetrieb das durch die Getriebeuntersetzung vergrösserte Drehmoment des Antriebsmotors gleich gross oder grösser ist wie im Normalbetrieb die Summe aus dem Drehmoment des Antriebsmotors und dem vom Schwungrad für den Stanzprozess zur Verfügung gestellten Drehmoment. Hierdurch wird es möglich, die Stanzpresse bzw. den Stanzautomaten sowohl im Normalbetrieb mit hohen Stanzfrequenzen als auch in einem Langsambetrieb zum Einrichten und Austesten von Stanzwerkzeugen mit voller Stanzkraft zu betreiben.

In einer bevorzugten Ausführungsform der Anordnung wird das Schwungrad vom Gehäuse der Getriebeeinheit gebildet, was den Vorteil ergibt, dass die Anlage besonders kompakt ausgeführt werden kann.

Weitere bevorzugte Ausführungen der Erfindung ergeben sich aus den abhängigen Ansprüchen und aus der nun folgenden Beschreibung anhand der Figuren. Dabei zeigen:
Fig. 1 einen Längsschnitt durch eine erfindungsgemässe Getriebeeinheit;
Fig. 2 einen Teil einer Rückansicht einer erfindungsgemässen Anordnung mit der Getriebeeinheit aus Fig. 1; und
Fig. 3 einen Teil einer Seitenansicht der Anordnung aus Fig. 2.

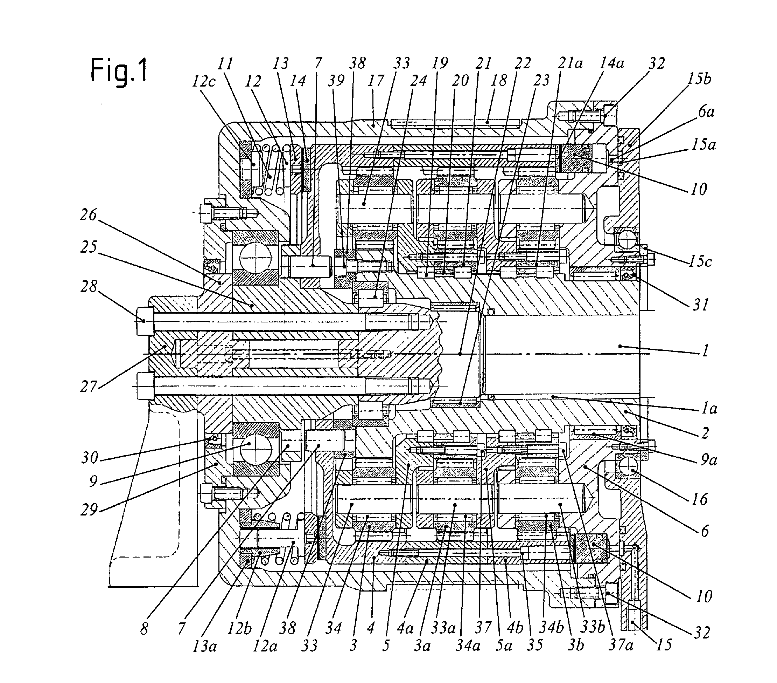

Fig. 1 zeigt eine erfindungsgemässe schaltbare Getriebeeinheit mit einem dreistufigen Planetengetriebe im vertikalen Längsschnitt, in der oberen Hälfte in einem Schaltzustand, in dem das Getriebe wirksam ist und in der unteren Hälfte in einem Zustand, in dem das Getriebe gesperrt ist (d.h. Übersetzungsverhältnis 1:1).

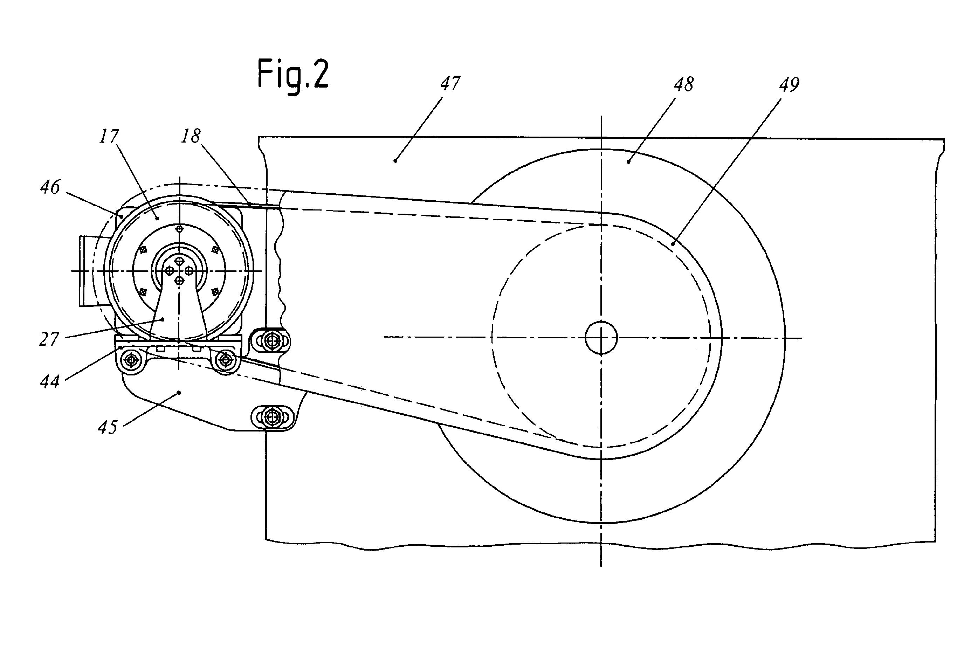

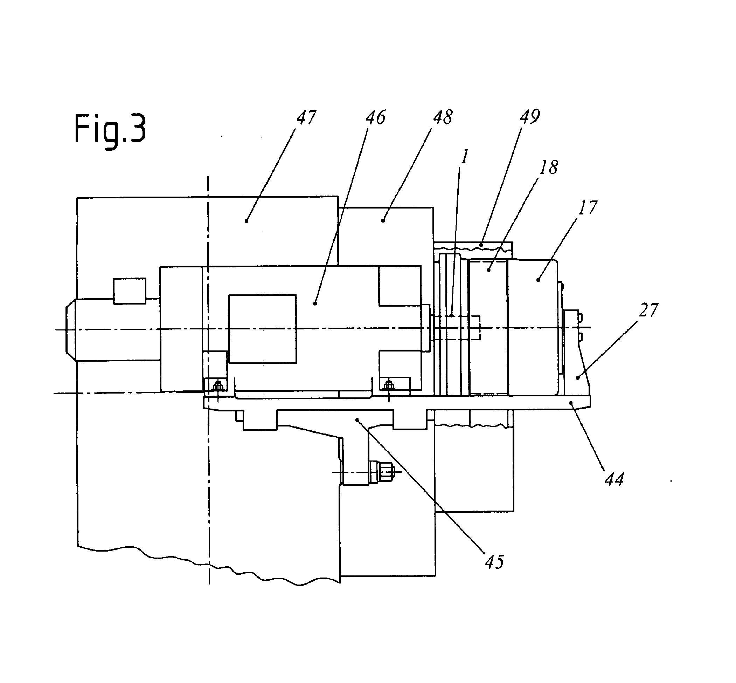

Wie zu erkennen ist, weist die Getriebeeinheit ein zentrales erstes Antriebsrad 2 auf, welches an eine horizontal liegende Welle 1 eines Elektromotors 46 (in Figuren 2 und 3 gezeigt) angekoppelt ist. Im bestimmungsgemässen Betrieb treibt der Elektromotor 46 mittels Passfederverbindung 1a das zentrale erste Antriebsrad 2 des Planetengetriebes an. Dieses Antriebsrad 2 ist auf einer festen Achse 22, 25, 26 mit einem Rollenlager 24 fest gelagert und mit einem Nadellager 23 ausschliesslich radial gestützt.

In der ersten Übersetzungsstufe des Planetengetriebes sind vier erste Planetenräder 3 mit dem ersten Antriebsrad 2 und einem innen verzahnten topfförmigen ersten Hohlrad 4 im Eingriff. Die vier ersten Planetenräder 3 sind mittels Bolzen 33 und Nadelkränzen 34 drehbar und beidseitig in einem ersten Planetenträger 5 abgestützt.

Dieser Planetenträger 5 gibt das vergrösserte Drehmoment über Schrauben 37 an ein zweites Antriebsrad 21 weiter. Der Mechanismus 5, 21, 37 zum Antreiben der nächsten Getriebestufe ist mittels zylindrischer Rollen 19 und einem Käfig 20 auf dem ersten Antriebsrad 2 gelagert.

In der zweiten Übersetzungsstufe des Planetengetriebes sind fünf zweite Planetenräder 3a mit dem zweiten Antriebsrad 21 und einem zweiten innen verzahnten topfförmigen Hohlrad 4a im Eingriff. Die fünf zweiten Planetenräder 3a stützen sich in dem zweiten Hohlrad 4a ab und geben das Drehmoment mittels Bolzen 33a und Nadelkränzen 34a, beidseitig gestützt, an einen zweiten Planetenträger 5a ab. Dieser setzt sich auch aus mehreren Komponenten 5a, 21a, 37a zusammen und ist in derselben Art mit Rollen und einem Käfig auf dem ersten Antriebsrad 2 gelagert wie der Planetenträger 5 bei der ersten Übersetzungsstufe.

In der dritten Getriebestufe sind acht dritte Planetenräder 3b eingebaut, die sich in einem dritten Hohlrad 4b abstützen und ihr Moment über weitere Bolzen 33b und Nadelkränze 34b, nicht fliegend gestützt an einen dritten Planetenträger 6 weiterleiten. Dieser Träger 6 ist mittels Schrauben 32 fest mit dem Gehäuse 17 verbunden, welches den Zahnriemen 18 antreibt.

Auf diese Art kann das Drehmoment des Elektromotors 46 in dem in der oberen Hälfte von Fig. 1 dargestellten Zustand über mehrere Stufen auf ein sehr hohes Niveau gebracht werden. In diesem Fall ist ein Pneumatikringkolben 10 mit Druckluft beaufschlagt und drückt die mit Schrauben 35 verbundenen Hohlräder 4, 4a, 4b nach links gegen den ortsfesten, nicht drehbaren Lagerzapfen 25, wo diese mit mehreren am ersten Hohlrad 4 angeordneten zylindrischen Stiften 7 in Bohrungen im Lagerzapfen 25 eingreifen.

Ausgehend von dem in der unteren Hälfte von Fig. 1 dargestellten Zustand wird der zuvor beschriebene Zustand dadurch hergestellt, dass bei mit Druckluft beaufschlagtem Pneumatikringkolben 10 durch sehr langsames Drehen der Welle 1 des mit Achssteuerung ausgerüsteten Elektromotors 46 die zylindrischen Stifte 7 mit den Bohrungen im Lagerzapfen 25 in Übereinstimmung gebracht werden und sodann im Lagerzapfen 25 einrasten.

An der Hohlradgruppe 4, 4a, 4b greift auf der gegenüberliegenden Seite des Ringkolbens 10 ein Druckring 13 an, der mit einer Anzahl Schrauben-Druckfedern 11 dafür sorgt, dass bei einem Drucklosschalten des Ringkolbens 10 die ganze Hohlradgruppe 4, 4a, 4b wieder in die Stellung gemäss der unteren Hälfte von Fig. 1 (Grundstellung) zurück geschoben wird. Die Federn 11 stützen sich rückseitig auf einem hinteren Ring 13a ab.

In der in der oberen Hälfte von Fig. 1 gezeigten Stellung stehen die Hohlräder 4, 4a, 4b still und das Planetengetriebe ist als Gesamtes aktiv in sehr langsamer Drehung. Das heisst, dass der Zahnriemen 18 und das die Zahnriemenscheibe bildende Gehäuse 17 im konkreten Beispiel fast 19 Mal langsamer drehen als die Motorwelle 1 und gegenüber den still stehenden Hohlrädern 4, 4a, 4b eine Relativbewegung entsteht.

Aus diesem Grund ist ringkolbenseitig ein Gleitring 14a und federseitig ein Gleitring 14 fest auf den Hohlrädern 4, 4a, 4b montiert. Diese Gleitringe 14, 14a sorgen für verschleissfreies Gleiten auch unter dem Anpressdruck des Kolbens 10 und der Federn 11. Damit die einzelnen Federn 11 auf dem vorderen Ring 13 und dem hinteren Ring 13a positioniert sind, gibt es Federführungen vorne 12 und hinten 12c. Damit darüber hinaus auch der vordere Ring 13 gegenüber dem hinteren Ring 13a geführt ist, gibt es an drei Stellen, gleichmässig über den Umfang verteilt, spezielle Federführungen 12a mit Führungsbüchsen 12b.

Damit die Druckluft in das sich drehende Getriebe eingespeist werden kann, gibt es eine Speisung 15, die den Ringkolben 10 über eine Ringnut 15a und mehrere Bohrungen 6a im dritten Planetenträger 6 versorgt. Diese Speisung 15 ist von einem ringförmigen Deckel 15b gebildet, welcher mit einem beidseitig abgedichteten Kugellager 16 auf dem dritten Planetenträger 6 gelagert ist, wobei das Lager 16 mit einem Ring 15c axial fixiert ist. Das Gehäuse 17 mit Zahnriemen 18 ist über einen Deckel 29 auf der linken Seite auf einem Kugellager 9 befestigt und auf den stillstehenden Elementen 25, 26, 27 axial fest gelagert. Diese sind mit Schrauben 28 verbunden. Eine Wellendichtung 30 schliesst die linke Seite. Auf der Gegenseite liegt das Loslager 9a auf dem sich im Betrieb drehenden ersten Antriebsrad 2 axial frei auf. Ein Wellendichtring 31 schliesst hier ab. Die Abstützung nach aussen übernimmt auf dieser Seite das vordere Lager des Elektromotors 46. Dieser muss entsprechend genau fluchtend und höhengleich an der Getriebeeinheit angebaut werden. Die nötige Abstimmung kann beispielsweise mittels Einpassen der Stütze 27 links bezüglich Höhe und Form erreicht werden.

Zum Abschalten oder Kurzschliessen des Getriebes im Stillstand muss der Raum hinter dem Kolben 10 drucklos gemacht werden. Durch die Kraft der Federn 11 wird, ausgehend von der in der oberen Hälfte von Fig. 1 gezeigten Position, die Hohlradgruppe 4, 4a, 4b über den Gleitring 14 und der Druckkolben 10 über den Gleitring 14a nach rechts in die in der unteren Hälfte von Fig. 1 gezeigte Position geschoben. Durch sehr langsames Drehen der Motorwelle 1 werden die Stifte 7 in die entsprechenden Bohrungen im Flansch 38 geschoben, der mit Schrauben 39 am Antriebsrad 2 befestigt ist. In dieser Getriebestellung ist das erste Antriebsrad 2 einerseits direkt über die Stifte 7 mit der Hohlradgruppe 4, 4a, 4b verbunden und andererseits steht es in Verbindung mit den vier ersten Planetenrädern 3, die auch wieder mit dem ersten Hohlrad 4 im Eingriff stehen. Damit ist das gesamte Planetengetriebe blockiert bzw. kurzgeschlossen und das die Riemenscheibe bildende Gehäuse 17 nimmt dieselbe Drehzahl an wie die Welle 1 des Elektromotors 46.

Die Darstellungen gemäss den Figuren 2 und 3 zeigen eine erfindungsgemässe Anordnung mit der Getriebeeinheit aus Fig. 1 und einer damit angetriebenen Stanzpresse 47, einmal in einer teilweisen Rückansicht (Fig. 2) mit dem so genannten Hauptantrieb und einmal in einer teilweisen Seitenansicht (Fig. 3) mit der Motoraufhängung.

Wie zu erkennen ist, ist der Elektromotor 46 mit der Getriebeeinheit auf einer Konsole 44 befestigt, welche mit Gummidämpfern auf einem Motorträger 45 befestigt ist, der wiederum am Pressenoberteil 47 befestigt ist. Der Motorträger 45 kann seitlich verschoben werden, um den Riemen 18 vorzuspannen. Das Schwungrad der Stanzpresse ist unter einer Verschalung 48 angeordnet und ein Riemenschutz 49 verhindert den Zugriff auf den Riemen 18.

Um eine einfache Überprüfung des Schaltzustands der Getriebeeinheit zu ermöglichen, ist es vorgesehen, eine der drei speziellen Federführungen 12a länger auszubilden und abgedichtet nach aussen zu führen, so dass deren axiale Position aussen sichtbar oder mit einem Positionssensor abgreifbar ist, zur Identifizierung des jeweiligen Schaltzustands der Getriebeeinheit.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Getriebeeinheit zum Verbinden eines Antriebsmotors mit einer Arbeitsmaschine, insbesondere mit einer Stanzpresse, umfassend ein Antriebselement (2) zur Ankopplung an den Antriebsmotor und ein Abtriebselement (17) zur Ankopplung an die Arbeitsmaschine,
wobei die Getriebeeinheit schaltbar ist, derart, dass wahlweise ein erstes oder ein zweites Übersetzungsverhältnis einstellbar ist,
und wobei die Getriebeeinheit in ein Gehäuse (17) integriert ist, welches gleichzeitig das Abtriebselement (17) bildet.

2. Getriebeeinheit nach Anspruch 1, **dadurch gekennzeichnet, dass** das erste Übersetzungsverhältnis 1:1 ist.

3. Getriebeeinheit nach Anspruch 2, **dadurch gekennzeichnet, dass** die Getriebeeinheit derartig ausgebildet ist, dass bei gewähltem ersten Übersetzungsverhältnis die Getriebeeinheit gesperrt ist.

4. Getriebeeinheit nach einem der vorangehenden Ansprüche, **dadurch gekennzeichnet, dass** das zweite Übersetzungsverhältnis eine Untersetzung grösser 1:15 ist.

5. Getriebeeinheit nach einem der vorangehenden Ansprüche, **dadurch gekennzeichnet, dass** die Getriebeeinheit ein Planetengetriebe gebildet aus Hohlrad (4, 4a, 4b), Sonnenrad (2, 21) und mehreren an einem Planetenträger (5, 5a, 6) gelagerten Planetenrädern (3, 3a, 3b) umfasst.

6. Getriebeeinheit nach Anspruch 5, **dadurch gekennzeichnet, dass** Planetengetriebe mehrstufig ausgebildet ist, wobei jede Getriebestufe ein Hohlrad (4, 4a, 4b), ein Sonnenrad (2, 21) und mehrere an einem Planetenträger (5, 5a, 6) gelagerte Planetenräder (3, 3a, 3b) umfasst.

7. Getriebeeinheit nach Anspruch 6, **dadurch gekennzeichnet, dass** die Getriebestufen eine unterschiedliche Anzahl Planetenräder (3, 3a, 3b) aufweisen, derart, dass die Getriebestufen je mehr Planetenräder (3, 3a, 3b) aufweisen, je weiter sie in Kraftflussrichtung stromabwärts vom Antriebselement (2) angeordnet sind.

8. Getriebeeinheit nach einem der Ansprüche 6 bis 7, **dadurch gekennzeichnet, dass** die Planetenräder (3, 3a, 3b) sämtlicher Getriebestufen einen identischen Durchmesser aufweisen, und insbesondere identisch sind.

9. Getriebeeinheit nach einem der Ansprüche 6 bis 8, **dadurch gekennzeichnet, dass** die Hohlräder (4, 4a, 4b) sämtlicher Getriebestufen einen identischen Durchmesser aufweisen, und insbesondere identisch bezüglich ihres Verzahnungsmoduls sind.

10. Getriebeeinheit nach einem der Ansprüche 6 bis 9, **dadurch gekennzeichnet, dass** jeweils das Sonnenrad (2, 21) der in Kraftflussrichtung stromabwärts vom Antriebselement (2) angeordneten Getriebestufe vom Planetenträger (5, 5a) der in Kraftflussrichtung stromaufwärts von dieser Getriebestufe angeordneten Getriebestufe gebildet wird.

11. Getriebeeinheit nach einem der Ansprüche 6 bis 10, **dadurch gekennzeichnet, dass** die Hohlräder (4, 4a, 4b) sämtlicher Getriebestufen von einem gemeinsamen, insbesondere aus mehreren Teilen (4, 4a, 4b) gebauten Bauteil gebildet sind.

12. Getriebeeinheit nach einem der Ansprüche 5 bis 11, **dadurch gekennzeichnet, dass** die Schaltbarkeit der Getriebeeinheit dadurch gegeben ist, dass das oder die Hohlräder (4, 4a, 4b) des Planetengetriebes wahlweise mit einer im Betrieb stillstehenden Körperlichkeit (25) oder dem Antriebselement (2) koppelbar sind.

13. Getriebeeinheit nach Anspruch 12, **dadurch gekennzeichnet, dass** die Getriebeeinheit derartig ausgebildet ist, dass das oder die Hohlräder (4, 4a, 4b) des Planetengetriebes zum wahlweisen Koppeln mit der im Betrieb stillstehenden Körperlichkeit (25) oder dem Antriebselement (2) axial zwischen einer ersten und einer zweiten Position verschiebbar sind, jeweils unter Erzeugung eines rotatorischen Kraft- und/oder Formschlusses mit der im Betrieb stillstehenden Körperlichkeit (25) bzw. mit dem Antriebselement (2).

14. Getriebeeinheit nach Anspruch 13, **dadurch gekennzeichnet, dass** die Getriebeeinheit derartig ausgebildet ist, dass das Verschieben des Hohlrads oder der Hohlräder (4, 4a, 4b) des Planetengetriebes zumindest in eine der beiden Verschieberichtungen mittels eines pneumatischen oder hydraulischen Antriebs bewirkbar ist, insbesondere mittels einer oder mehrerer pneumatischer Kolben-Zylinder-Einheiten (10, 10a).

15. Getriebeeinheit nach Anspruch 14, **dadurch gekennzeichnet, dass** die Getriebeeinheit derartig ausgebildet ist, dass das Verschieben des Hohlrads oder der Hohlräder (4, 4a, 4b) des Planetengetriebes in einer ersten der beiden Verschieberichtungen mittels des pneumatischen Antriebs (10, 10a) entgegen einer von einem oder mehreren elastischen Federelementen (11) erzeugten federnden Rückstellkraft bewirkbar ist und bei Drucklosschaltung des pneumatischen oder hydraulischen Antriebs (10, 10a) eine Rückstellung durch Verschiebung des Hohlrads oder der Hohlräder (4, 4a, 4b) des Planetengetriebes in der zweiten, der ersten Verschieberichtung entgegen gesetzten Verschieberichtung erfolgt.

16. Getriebeeinheit nach einem der Ansprüche 5 bis 15, **dadurch gekennzeichnet, dass** der Planetenträger oder, bei einer Getriebeeinheit mit einem mehrstufigen Planetengetriebe, der Planetenträger (6) der letzten Getriebestufe drehfest und insbesondere starr mit dem Gehäuse (17) der Getriebeeinheit verbunden ist.

17. Getriebeeinheit nach einem der vorangehenden Ansprüche, **dadurch gekennzeichnet, dass** das Gehäuse (17) an seinem Aussenumfang eine Lauffläche für einen Keilriemen oder einen Flachriemen aufweist, oder eine Verzahnung (18) für einen Zahnriemen, eine Kette oder ein Zahnrad, zum Ankoppeln an ein entsprechendes Antriebselement einer Arbeitsmaschine.

18. Anordnung umfassend
a) eine Stanzpresse mit einem Kurbel- oder Exzentertrieb zur Umwandlung der rotatorischen Bewegung einer Antriebswelle der Stanzpresse in die Stanzbewegung des Werkzeugs und mit einem mit der Antriebswelle koppelbaren oder gekoppelten Schwungrad;
b) einen Antriebsmotor (46) zum Antreiben der Antriebswelle der Stanzpresse; und
c) eine Getriebeeinheit nach einem der vorangehenden Ansprüche,
wobei das Antriebselement (2) der Getriebeeinheit mit dem Antriebsmotor (46) gekoppelt oder über eine schaltbare Kupplung koppelbar ist und das Abtriebselement (17) der Getriebeeinheit mit der Antriebswelle der Stanzpresse oder dem Schwungrad gekoppelt oder über eine schaltbare Kupplung koppelbar ist.

19. Anordnung nach Anspruch 18, **dadurch gekennzeichnet, dass** der Antriebsmotor (46) und die Übersetzungsverhältnisse der Getriebeeinheit derartig dimensioniert sind, dass die maximale Stanzkraft, die im Betrieb mit demjenigen Übersetzungsverhältnis der Getriebeeinheit, bei welchem die langsamere Drehung der Antriebswelle resultiert, am Stössel der Stanzpresse erzeugbar ist, gleich gross oder grösser ist wie die maximale Stanzkraft, die im Betrieb mit dem Übersetzungsverhältnis der Getriebeeinheit, bei welchem die schnellere Drehung der Antriebswelle resultiert, am Stössel der Stanzpresse erzeugbar ist.

20. Anordnung nach einem der Ansprüche 18 bis 19, **dadurch gekennzeichnet, dass** das Schwungrad vom Gehäuse (17) der Getriebeeinheit gebildet ist.
